# EUROPEAN PATENT APPLICATION

(11) **EP 0 629 523 A1**
(43) Date of publication of application: **21.12.1994**
(21) Application number: 94109165.4
(22) Date of filing: 15.06.1994
(51) Int. Cl.: B60N 2/22

(54) **Adjustable vehicle seat backrest**

(30) Priority: 17.06.1993 IT MO930015 U
(71) Applicant: Pederzini S.r.l., I-41030 Sorbara (Modena) (IT)
(72) Inventor: Pederzini, Mario, I-41030 Sorbara, Modena (IT); Pederzini, Gianfranco, I-41030 Sorbara, Modena (IT)
(74) Representative: Modiano, Guido, Dr.-Ing.

(57) **Abstract**

Device for mutually anchoring the back (2) and the horizontal portion (3) of motor vehicle seats (4) including a disk (5) which is peripherally provided with teeth (5a) and is keyed on the axis (6) for the articulation of the back to the horizontal portion of the seat; the set of teeth has an orientation and can engage an articulated pawl (11) which has a complementary set of teeth (11b) and is kept in engaged position with elastic pusher elements (10).

## Description

The present invention relates to a device for mutually anchoring the back and the horizontal portion of motor vehicle seats.

It is known that in motor vehicles, and particularly in cars, the couplings for safety belts are located on the side posts of the body and on the floor of the passenger compartment.

In order to better adapt the fit of the safety belts to the height of the people on board, these couplings have been equipped, on higher-level models, with a vertical adjustment for the couplings located on said posts.

This technology certainly provides good results in terms of safety, but has the drawback of substantially limited practicality in use: use of the belts is in fact substantially unpleasant and is avoided by a large percentage of car users.

In high-performance cars, in order to deal with this problem the couplings have been placed on board the seat, so as to avoid creating the discomfort caused by the oblique portion of the belt which is connected to the post and instead convert the belt into a sort of item of clothing to be "worn" with ease by the passengers.

This solution is certainly the most appreciable from the functional point of view, but it has raised the problem of the mechanical strength resistance of the seat, and particularly of its back, if subjected to a sudden jerk caused by an accident.

In order to pass the demanding crash-tests to which these structures are subjected, it has in fact been necessary to oversize the framework of the entire seat, with a consequent significant increase in overall weight.

Furthermore, some types of couplings have in any case shown a dangerous fragility indeed between the horizontal portion of the seat and the point where the base of the back connects to said horizontal portion; since all backs are now of the reclining type, said back tends, under stress, to bend forward and to follow, due to the inertia caused by the weight of the back itself and of the passenger, the deceleration towards the front of the motor vehicle subjected to an impact.

A pricipal aim of the present invention is to solve the above described problem of the known art by providing a device for mutually anchoring the back and the horizontal portion in motor vehicle seats which avoids the above mentioned bending of the back without having to resort to onerous increases in weight due to oversizing of the seat structure, allowing instead to adopt very light seats, such as those made of synthetic fiber, while nonetheless ensuring maximum safety.

According to the present invention, there is provided a device for mutually anchoring the back and the horizontal portion of motor vehicle seats, which comprises a disk which is peripherally provided with teeth and can be keyed in fixed position on the axis for the articulation of the back to the horizontal portion of the seat, one end of a semicircular link being pivoted to an outer face of said disk, said link being arranged edgeways and parallel to said outer face, the opposite end of said link being vertically movable by virtue of associated means for contacting and lifting, in contrast with elastic pusher elements, an overlying pawl which is articulated to the back, one face of said pawl being complementarily toothed for spontaneous engagement with said peripheral set of teeth of said disk in active configuration, said pawl being disengageable from the disk by performing a rotation so as to lift the back with respect to the horizontal portion of the seat.

Further characteristics and advantages of the device according to the present invention will become apparent from the following detailed description of a preferred embodiment thereof, illustrated only by way of non-limitative example in the accompanying drawings, wherein:

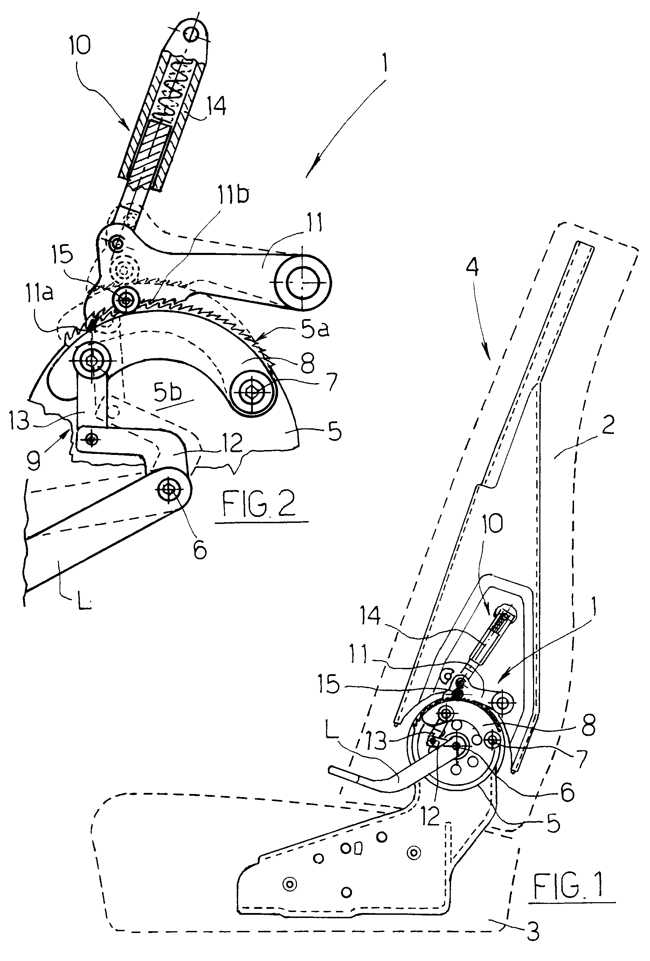

figure 1 is a partially-sectional elevation view of the anchoring device according to the invention in its arrangement on a seat;
figure 2 is a slightly enlarged detail view of the operation steps of the anchoring device.

With particular reference to the above figures, the reference numeral 1 designates a device for mutually anchoring the back 2 and the horizontal portion 3 in motor vehicle seats 4.

The device 1 comprises a disk 5 which is peripherally provided with teeth on the edge at 5a and can be keyed in a fixed position on the same axis 6 that articulates the back 2 to the horizontal portion 3.

The end of a semicircular link 8 is pivoted at 7 to an outer face 5b of said disk 5; said link is also arranged edgeways and parallel to said face 5b, and its opposite end can be moved vertically with the intervention of related means 9 which have the purpose of achieving contact with said means and the consequent lifting, all in contrast with elastic pusher means 10, of a pawl 11 which is articulated to the back 2; a face 11a of said pawl, directed towards the edge 5a of the disk 5, is complementarily toothed at 11b for spontaneous engagement with said edge.

Said contact and lifting means 9 comprise a lever arm 12 which is also rigidly mounted on the axis 6 for the articulation between the back 2 and the horizontal portion 3 and therefore rotates together with said axis; the free end of said lever arm is in turn articulated to the big end of a connecting rod 13, the opposite end whereof is articulated to the link 8.

The elastic pusher elements 10 comprise a cylinder 14 with a spring-biased piston which can be axially compressed and which is normally extended in its unloaded configuration. The piston is pivotally connected to the pawl 11.

A pin 15 is provided for contact between the pawl 11 and the related contact and lifting means 9; said pin protrudes laterally from said pawl and is in contact with the edges of the link 8.

The operation of the invention can be intuitively deduced from the above description: in the normal static configuration for use, the pawl 11 is kept in contact with the disk 5 under the thrust applied by the cylinder 14; in this manner the sets of teeth 5a and 11a mesh and, since they are orientated in a single direction, they prevent the back 2 from reclining onto the horizontal portion 3 even under violent traction.

The actuation of a conventional lever L to recline said back 2 causes the rotation of the arm 12 and of the connecting rod 13 which is articulated thereto and lifts the link 8 by rotating it upwardly: this makes the link push against the pin 15 and consequently disengages the pawl 11 from the disk 5, compressing the contrast cylinder 14.

Once adjustment has been performed, the release of the lever L restores the engagement between the pawl 11 and the disk 5, consequently automatically locking the rotation of the back 2 towards the horizontal portion 3.

The disk 5 rotates rigidly with the articulation axis 6 and the set of teeth 5a preferably affects only the upper region of the disk along a circular arc which is equal to the maximum stroke of the back 2 with respect to the horizontal portion 3.

In practice it has been observed that the described invention achieves the intended aim and objects.

The invention thus conceived is susceptible to modifications and variations, all of which are within the scope of the inventive concept.

All the details may furthermore be replaced with other technically equivalent elements.

In the practical execution of the invention, the materials employed, as well as the shapes and dimensions, may be any according to the requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Device (1) for mutually anchoring the back (2) and the horizontal portion (3) of motor vehicle seats (4), comprising a disk (5) which is peripherally provided with teeth (5a) and can be keyed in fixed position on the axis (6) for the articulation of the back to the horizontal portion of the seat, one end of a semicircular link (8) being pivoted to an outer face (5b) of said disk, said link being arranged edgeways and parallel to said outer face, the opposite end of said link being vertically movable by virtue of associated means for contacting and lifting, in contrast with elastic pusher elements (10), an overlying pawl (11) which is articulated to the back, one face (11a) of said pawl being complementarily toothed for spontaneous engagement with said peripheral set of teeth of said disk in active configuration, said pawl being disengageable from the disk by performing a rotation so as to lift the back with respect to the horizontal portion of the seat.

2. Anchoring device according to claim 1, characterized in that said set of teeth (5a) of the disk is orientated in contrast with the rotation of the back onto the horizontal portion and affects the upper half of the circumference of the disk (5).

3. Anchoring device according to claim 1, characterized in that the convex portion of said semicircular link (8) is directed outwardly and its edge is substantially flush with said set of teeth (5a) of the disk (5).

4. Anchoring device according to claim 1, characterized in that said means for moving the link are constituted by a lever arm (12) which is mounted so that it rotates rigidly with said back articulation axis, the free end of said lever having the big end of a connecting rod (13) articulated thereto, the opposite end of said connecting rod being in turn articulated to the concurring end of the link.

5. Anchoring device according to claim 1, characterized in that said elastic pusher elements are constituted by an axially compressible cylinder (14) with spring-biased piston which is normally in its expanded configuration, said cylinder being interposed between said pawl and the structure of the back.

6. Device according to claims 1 and 3, characterized in that a pin (15) for contact with said edge of the link (8) protrudes laterally from said pawl (11).

7. Device for mutually anchoring the back and the horizontal portion in motor vehicle seats, comprising one or more of the technical features described herein and/or described in the appended drawings.
